Europäisches Patentamt

(19) European Patent Office

Office européen des brevets

(11) Numéro de publication: **0 003 709**
**B1**

(12) **FASCICULE DE BREVET EUROPÉEN**

(45) Date de publication du fascicule du brevet:
14.07.82

(51) Int. Cl.³: **C 22 B 60/02**, C 22 B 34/34,
C 22 B 34/22, C 22 B 3/00

(21) Numéro de dépôt: 79420005.5

(22) Date de dépôt: 02.02.79

(54) **Attaque à haute température de minerais par une liqueur contenant pour l'essentiel un bicarbonate soluble.**

(30) Priorité: 09.02.78 FR 7804468

(43) Date de publication de la demande:
22.08.79 Bulletin 79/17

(45) Mention de la délivrance du brevet:
14.07.82 Bulletin 82/28

(84) Etats contractants désignés:
**DE GB NL SE**

(56) Documents cités:
**FR-A-1 069 426**
**FR-A-1 092 946**
**FR-A-2 050 549**
**US-A-2 992 887**
**US-A-3 036 891**
**US-A-3 429 683**

(73) Titulaire: **ALUMINIUM PECHINEY, 28, rue de Bonnel,
F-69433 Lyon Cedex 3 (FR)**

(72) Inventeur: **Maurel, Pierre, 11, place des Sophoras, "Les
Tourelles" F-13100 Aix-en-Provence (FR)**
Inventeur: **Nicolas, François, L'Oliveraie
Bâtiment 11 Route de Nice, F-13100 Aix-en-Provence
(FR)**
Inventeur: **Bosca, Bernard, Immeuble "Le Cézanne"
Bâtiment C1 Chemin des Aires, F-13120 Gardanne (FR)**

(74) Mandataire: **Gaucherand, Michel et al, PECHINEY
UGINE KUHLMANN 28 rue de Bonnel, F-69433 Lyon
Cedex 3 (FR)**

Attaque à haute température de minerais par une liqueur contenant pour l'essentiel un bicarbonate soluble

La présente invention concerne un nouveau procédé d'attaque oxydante à haute température de minerais contenant au moins un métal appartenant au groupe constitué par l'uranium, le vanadium et le molybdène, par une liqueur aqueuse contenant en majeure partie du bicarbonate de sodium et en mineure partie du carbonate de sodium, dans laquelle un gaz contenant de l'oxygène libre est introduit, procédé destiné à permettre l'obtention du métal sous la forme d'un sel soluble.

On sait déjà que des minerais tels que par exemple les minerais uranifères ont été soumis à des attaques oxydantes alcalines par des solutions carbonatées, mais contenant aussi une faible quantité de bicarbonate de sodium. Cette attaque s'effectuait en présence d'oxygène libre, insufflé dans le milieu réactionnel chaud.

C'est ainsi que la littérature spécialisée en la matière a décrit des modes opératoires pour la réalisation de cette attaque alcaline oxydante. (The Extractive Metallurgy of Uranium, de Robert C. Merritt, édité par Colorado School of Mines Research Institute, édition 1971, page 83 et suite.)

Selon un premier mode opératoire, on attaquait un minerai uranifère, préférentiellement à haute teneur en carbonates, par une liqueur contenant 40 à 50 g/l de $Na_2CO_3$ et 10 à 20 g/l de $NaHCO_3$ en présence d'oxygène ou d'air insufflé dans le milieu réactionnel.

Les conditions de l'attaque, qui s'effectuait dans un autoclave, se situaient dans un domaine de températures comprises entre 95°C et 120°C, de pression totale régnante dans l'enceinte comprise entre 2 et 6,5 bar avec des durées d'attaques qui pouvaient varier entre 4 et 20 heures.

Selon un deuxième mode, le même minerai uranifère à haute teneur en carbonates, était attaqué par la même liqueur, contenant 40 à 50 g/l de $Na_2CO_3$ et 10 à 20 g/l de $NaHCO_3$, en présence d'oxygène ou d'air insufflé dans le minerai réactionnel. Mais les conditions de l'attaque, qui s'effectuait dans un »Pachuca«, étaient différentes: la température était comprise dans l'intervalle 75°C à 80°C, tandis que la pression d'injection de l'air ou de l'oxygène dans le milieu réactionnel se situait dans l'intervalle de 2 à 3 bar, pour une durée d'attaque de 96 heures.

De même, selon un autre mode opératoire, décrit dans l'USP 3 036 881, on procédait à l'attaque oxydante d'un minerai uranifère au moyen d'une liqueur aqueuse contenant une mineure partie de bicarbonate de sodium et une majeure partie de carbonate de sodium, de telle manière que le rapport massique bicarbonate de sodium/carbonate de sodium soit au plus égal à 0,79, ladite attaque s'effectuant en présence d'un catalyseur d'oxydation, à une température de l'ordre de 80°C. Enfin, selon un autre mode opératoire, décrit dans l'USP 3 429 693, on proposait un procédé d'attaque d'un minerai de beryllium, de vanadium, de molybdène ou de tungstène au moyen d'une liqueur d'attaque contenant des bicarbonate et carbonate de sodium dans un rapport massique bicarbonate de sodium/carbonate de sodium au plus égal à 0,79, en présence d'agents oxydant et à une température comprise entre 60°C et 250°C pendant un temps compris entre une demi-heure et huit heures.

Selon les auteurs, de tels modes opératoires qui se sont révélés interressants pour l'attaque de certains minerais uranifères ou de minerais contenant du molybdène, du vanadium, du beryllium ou du tungstène, sont difficilement applicables quand il s'agit de réaliser l'attaque de minerais réfractaires ou encore siliceux.

En outre, ces modes opératoires réclament, pour atteindre un rendement de solubilisation de l'uranium satisfaisant, des durées importantes de séjour dans le réacteur.

Dès lors, en raison des inconvénients précités, la demanderesse, poursuivant ses recherches, a mis au point un nouveau procédé d'attaque oxydante de minerais contenant au moins un métal appartenant au groupe constitué par l'uranium, le vanadium et le molybdène, permettant d'améliorer la cinétique de réaction ainsi que les rendements d'extraction du ou des métaux recherchés, et de pouvoir traiter des minerais de composition éminemment variable, et en particulier ceux riches en carbonates, ceux lesquels le ou les métaux sont associés à des matières organiques, et ceux qui, jusqu'à ce jour, relevaient, pour l'homme de l'art, d'une attaque en milieu acide.

Le nouveau procédé selon l'invention, d'attaque oxydante à haute température et sous pression, de minerais contenant au moins un métal appartenant au groupe constitué par l'uranium le vanadium et le molybdène, par une liqueur aqueuse contenant du carbonate de sodium et du bicarbonate de sodium, en présence d'oxygène libre insufflé dans le milieu réactionnel en vue d'obtenir le ou les métaux recherchés sous la forme de sels solubles en solution aqueuse, se caractérise par le fait que le minerai est traité par une liqueur aqueuse contenant en majeure partie du bicarbonate de sodium et en mineure partie du carbonate de sodium, et que le milieu réactionnel est maintenu à une température comprise entre 160°C et 300°C pendant un temps ne dépassant pas 6 heures.

Comme cela est bien connu, l'attaque oxydante des minerais précités s'effectue grâce à l'insufflation d'oxygène libre, introduit sous forme d'un gaz contenant de l'oxygène tel que l'air, de l'air enrichi en oxygène, ou encore de l'oxygène seul; cette insufflation s'effectue sous une pression telle que la pression partielle d'oxygène dans le réacteur se situe dans l'intervalle 0,1 à 20 bar, mais de préférence entre 5 et 15 bar.

La liqueur aqueuse d'attaque, comme cela a déjà été dit, est constituée en majeure partie de bicarbonate de sodium, et en mineure partie par du carbonate de sodium de manière que le rapport massique $NaHCO_3/Na_2CO_3$ soit au moins égal à 1,5. Mais la demanderesse a remarqué qu'il était préférable de choisir le rapport dans le domaine délimité par les valeurs 4 à 80.

Selon la nature du minerai, le rapport précité est fixé à la valeur choisie et la concentration de la liqueur destinée à l'attaque peut varier dans de larges limites pour chacun des réactifs présents. Ainsi, la concentration en $NaHCO_3$ peut varier entre 10 g/l et 300 g/l, mais de préférence entre 80 g/l et 160 g/l, tandis que la concentration en $Na_2CO_3$ peut se situer dans l'intervalle de 0 g/l à 50 g/l, mais de préférence entre 0 g/l à 30 g/l.

Selon une variante qui s'est révélée intéressante dans le cadre du procédé selon l'invention, du gaz $CO_2$ peut être insufflé dans le milieu réactionnel pendant que s'effectue l'attaque. Cette insufflation peut se faire d'une manière continue ou discontinue selon un débit constant ou variable,

Ainsi, l'injection de ce gaz $CO_2$ permet, tout à la fois, de contrôler et d'ajuster la teneur en $CO_3H^-$ du milieu réactionnel qui peut être modifié par le fait que la quantité d'oxygène insufflée peut être plus importante que celle réllement nécessaire pour permettre l'oxydation.

Le domaine des températures pratiquées pour l'attaque a été spécialement étudié par la demanderesse. Ainsi, celle-ci a pu définir une plage de températures particulièrement favorables située entre les valeurs limites 160° C et 300° C. Mais dans la majorité des cas, la température d'attaque peut se situer préférentiellement entre 180° C et 220° C.

La durée d'attaque est généralement courte, et n'excède pas 6 heures, et se situe de préférence entre $1/2$ heure et 2 heures.

Selon une disposition particulière, il peut se révéler avantageux dans le cas de certains minerais, d'introduire dans le milieu réactionnel un catalyseur d'oxydation usuel permettant d'améliorer la cinétique d'attaque.

En pratique, le procédé selon l'invention peut également comporter un ou plusieurs traitements préalables du minerai avant que s'effectue son attaque proprement dite selon les conditions précitées. Tout d'abord, il peut se révéler nécessaire que le minerai subisse, non pas un habituel broyage, mais un broyage particulièrement poussé, en vue de multiplier les interfaces entre les grains du minerai et la liqueur d'attaque. De même, il peut être avantageux d'éliminer préalablement les matières organiques contenues dans le minerai par une calcination à température contrôlée.

Mais il peut être encore envisagé de faire subir au minerai un traitement préalable par un lait de chaux, par une liqueur sodique, ou encore par une liqueur calcosodique, par une liqueur renfermant des ions $CO_3^=$ et/ou $CO_3H^-$ associés à au moins un cation tel que $Na^+$, $K^+$, $NH_4^+$, $Ca^{2+}$. Enfin dans certains cas, il s'avère avantageux de réaliser un traitement préalable d'enrichissement physique par les techniques connues de l'homme de l'art, telles que par exemple par flottation.

Il est évident que les divers traitements préalables peuvent être combinés entre eux.

Les avantages du procédé selon l'invention seront plus perceptibles grâce aux exemples donnés à titre illustratif.

## Exemple 1

On a traité, selon le procédé de l'invention, un minerai uranifère ayant la composition pondérale suivante après séchage:

| | |
|---|---|
| U | 0,064% |
| $SiO_2$ | 68,4% |
| $Al_2O_3$ | 14,5% |
| $Fe_2O_3$ | 4,3% |
| MgO | 1,35% |
| CaO | 0,70% |
| $Na_2O$ | 0,70% |
| $K_2O$ | 1,65% |
| $TiO_2$ | 0,75% |
| $P_2O_5$ | 0,18% |
| divers | 7,406% |
| (dont $CO_2$ 2,0% et | |
| C organique 0,37%) | |

1000 kg de ce minerai ont été broyés à une dimension de grains inférieure à 200 μ puis introduits dans un autoclave avec 1051 kg d'une liqueur d'attaque renfermant 158 kg de $NaHCO_3$ et 30 kg de $Fe(OH)_3$ comme catalyseur d'oxydation.

Le milieu réactionnel était maintenu à 200° C pendant 2 heures.

Pendant toute la durée de l'attaque, on injectait de l'oxygène dans le milieu réactionnel, selon un débit de l'ordre de 3 $m^3/h$, la pression totale dans le réacteur étant de 23 bar.

Au bout de ce temps, l'autoclave était refroidi puis vidangé.

La bouillie obtenue était filtrée et lavée par de l'eau.

On a ainsi recueilli 725 litres de liqueur-mère et 1200 litres de liqueur de lavage. La liqueur-mère recueillie avait la composition suivante:

| | |
|---|---|
| $Na_2CO_3$ | 26,5 g/l |
| $NaHCO_3$ | 113,5 g/l |
| Uranium | 0,58 g/l |
| (exprimé en U) | |

La liqueur de lavage de la fraction solide précipitée, avait la composition suivante:

| Na₂CO₃ | 6,07 g/l |
|---|---|
| NaHCO₃ | 26 g/l |
| U | 6,133 g/l |

La fraction solide recueillie avait une teneur en uranium de 68 ppm, ce qui correspondait à un rendement en uranium de 89,4%.

## Exemple 2

On a traité un minerai uranifère pauvre en uranium ayant la composition pondérale suivante:

| Uranium | 0,039% |
|---|---|
| SiO₂ | 70,6% |
| Al₂O₃ | 15,8% |
| Fe₂O₃ | 3,4% |
| MgO | 0,90% |
| CaO | 0,15% |
| Na₂O | 2,20% |
| K₂O | 3,45% |
| TiO₂ | 0,45% |
| P₂O₅ | 0,09% |
| Divers | 2,901% |
| (dont CO₂ 0,70% et | |
| C organique 0,18%) | |

750 kg de ce minerai ont été broyés à une dimension de grains inférieure à 200 μ, puis introduits dans un autoclave avec 787 kg d'une liqueur d'attaque contenant 158 kg de NaHCO₃ et 20 kg Fe(OH)₃ comme catalyseur.

Le milieu réactionnel était maintenu pendant 2 heures à 200°C, temps pendant lequel on injectait de l'oxygène sous un débit de 2,5 m³/h, la pression totale étant de 23 bar.

Après filtration de la bouillie, on recueillait 500 litres de liqueur-mère et 1000 litres de liqueur de lavage.

La liqueur-mère recueillie avait la composition suivante:

| Na₂CO₃ | 41,12 g/l |
|---|---|
| NaHCO₃ | 90,6 g/l |
| U | 0,345 g/l |

La liqueur de lavage de la fraction solide précipitée avait la composition suivante:

| Na₂CO₃ | 10,28 g/l |
|---|---|
| NaHCO₃ | 22,65 g/l |
| U | 0,086 g/l |

La fraction solide recueillie avait une teneur en uranium de 50 ppm ce qui correspondait à un rendement en uranium de 87,3%.

## Exemple 3

On a traité selon le procédé de l'invention un minerai uranifère très carbonaté ayant la composition pondérale suivante après séchage:

| U | 0,122% |
|---|---|
| SiO₂ | 50,0% |
| Al₂O₃ | 9,8% |
| Fe₂O₃ | 4,2% |
| MgO | 3,6% |
| CaO | 10,4% |
| Na₂O | 4,5% |
| K₂O | 0,20% |
| TiO₂ | 0,40% |
| P₂O₅ | 0,058% |
| V₂O₅ | 0,008% |
| Mo | 0,01% |
| S | 0,14% |
| Divers | 16,562% |
| (dont CO₂ 13,83% et | |
| C organique 0,205%). | |

600 kg de ce minerai sec ont été broyés à 160 μ, puis introduits dans un autoclave avec 630 kg d'une d'attaque renfermant 96 kg de NaHCO₃ et 18 kg de Fe(OH)₃ comme catalyseur d'oxydation.

L'autoclave a été chauffé de telle manière que le milieu réactionnel soit à 180°C tout en injectant de l'oxygène à un débit de 2 m³/h qui barbotait dans la pulpe. La pression totale régnant dans l'autoclave pendant l'attaque oxydante était de 15 bar.

Après une durée de 2 heures, l'autoclave a été refroidi et vidangé. La bouillie obtenue a été filtrée et lavée par de l'eau.

On a recueilli ainsi 565 litres de liqueur-mère et 905 litres de liqueur provenant du lavage de la fraction solide.

La liqueur-mère recueillie avait la composition suivante:

| Na₂CO₃ | 28,5 g/l |
|---|---|
| NaHCO₃ | 108,7 g/l |
| Uranium | 1,1 g/l |
| (exprimé en U) | |
| Na₂SO₄ | 1,28 g/l |

La liqueur de lavage de la fraction solide précipitée, avait la composition suivante:

| Na₂CO₃ | 2,05 g/l |
|---|---|
| NaHCO₃ | 7,80 g/l |
| U | 0,08 g/l |
| Na₂SO₄ | 0,09 g/l |

La fraction solide recueillie avait une teneur en uranium de 58 ppm, ce qui correspondait à un rendement en uranium de 95,2%.

## Exemple 4

On a réalisé l'attaque du même minerai que celui traité dans l'exemple 3, dans les mêmes conditions, mais en l'absence d'un catalyseur d'oxydation.

Température, durée d'attaque, débit d'oxygène et pression dans le réacteur étaient les mêmes que dans l'exemple 3.

En l'absence de tout catalyseur d'oxydation, la fraction solide recueillie avait une teneur en uranium de 60 ppm correspondant à un rendement en uranium de 95,1%.

### Exemple 5

On a traité selon le procédé de l'invention un minerai mixte d'uranium et de molybdène ayant la composition pondérale suivant après séchage:

| | |
|---|---|
| U | 0,225% |
| Mo | 0,054% |
| $SiO_2$ | 62,3% |
| $Al_2O_3$ | 13,5% |
| $Fe_2O_3$ | 4,1% |
| MgO | 0,34% |
| CaO | 0,59% |
| $Na_2O$ | 7,19% |
| $K_2O$ | 0,47% |
| $TiO_2$ | 0,46% |
| $P_2O_5$ | 0,07% |
| $V_2O_5$ | 0,01% |
| S | 0,1% |
| Divers | 10,561% |
| (dont $CO_2$ 0,85% et | |
| C organique 0,108%) | |

750 kg de ce minerai sec ont été broyés à 160 µ, puis introduits dans un autoclave avec 787 kg d'une liqueur d'attaque contenant 150 g/l de $NaHCO_3$ et 22 kg de $Fe(OH)_3$, comme catalyseur d'oxydation.

L'autoclave a été chauffé de manière que le milieu réactionnel soit à 180°C, tout en injectant de l'oxygène à un débit de 2,5 m³/h qui barbotait dans la pulpe. La pression totale règnant dans l'autoclave pendant l'attaque oxydante était de 15 bar.

Après une durée de 2 heures, l'autoclave a été refroidi et vidangé. La bouillie obtenue a été filtrée et lavée par de l'eau.

On a recueilli ainsi: 568 litres de liqueur-mère et 800 litres de liqueur provenant du lavage de la fraction solide.

La liqueur-mère recueillie avait la composition suivante:

| | |
|---|---|
| $Na_2CO_3$ | 27,5 g/l |
| $NaHCO_3$ | 109,8 g/l |
| Uranium | 2,37 g/l |
| (exprimé en U) | |
| Mo | 0,195 g/l |
| $Na_2SO_4$ | 2,2 g/l |

La liqueur de lavage de la fraction solide précipitée avait la composition suivante:

| | |
|---|---|
| $Na_2CO_3$ | 6,2 g/l |
| $NaHCO_3$ | 24,9 g/l |
| U | 0,54 g/l |
| Mo | 0,04 g/l |
| $Na_2SO_4$ | 0,5 g/l |

La fraction solide recueillie avait une teneur en uranium de 64 ppm, ce qui correspondait à un rendement en uranium de 97,5%.

### Exemple 6

On a réalisé l'attaque du même minerai que celui traité dans l'exemple 5, mais en l'absence de catalyseur d'oxydation.

Température, durée d'attaque, débit d'oxygène et pression dans le réacteur étaient les mêmes que dans l'exemple 5, ainsi que les quantités de minerai et de liqueur d'attaque mises en œuvre.

En l'absence de tout catalyseur d'oxydation, la fraction solide recueillie avait une teneur en uranium de 77 ppm, correspondant à un rendement de 97,0%.

### Exemple 7

On a traité selon le procédé de l'invention le même minerai que celui cité dans l'exemple 5, renfermant de l'uranium et du molybdène.

750 kg de ce minerai sec ont été broyés à 160 µ, puis introduits dans un autoclave avec 787 kg d'une liqueur d'attaque renfermant 135 g/l de $NaHCO_3$ et 15 g/l de $Na_2CO_3$. L'autoclave a été chauffé de manière que le milieu réactionnel soit à 180°C tout en injectant de l'oxygène à un débit de 2,5 m³/h qui barbotait dans la pulpe.

La pression totale règnant dans l'autoclave pendant l'attaque oxydante était de 15,5 bar.

Après une durée de 1 heure, l'autoclave a été refroidi et vidangé. La bouillie obtenue a été filtrée et lavée par de l'eau.

On a recueilli ainsi: 562 litres de liqueur-mère et 800 litres de liqueur provenant du lavage de la fraction solide.

La liqueur-mère recueillie avait la composition suivante:

| | |
|---|---|
| $Na_2CO_3$ | 28,2 g/l |
| $NaHCO_3$ | 109,2 g/l |
| Uranium | 2,46 g/l |
| (exprimé en U) | |
| Mo | 0,20 g/l |
| $Na_2SO_4$ | 2,1 g/l |

La liqueur de lavage de la fraction solide précipitée, avait la composition suivante:

| | |
|---|---|
| $Na_2CO_3$ | 6,6 g/l |
| $NaHCO_3$ | 25,7 g/l |
| U | 0,58 g/l |
| Mo | 0,04 g/l |
| $Na_2SO_4$ | 0,5 g/l |

La fraction solide recueillie avait une teneur en uranium de 82 ppm, ce qui correspondait à un rendement de 96,8%.

## Revendications

1. Procédé d'attaque oxydante à haute température de minerais contenant au moins un métal appartenant au groupe constitué par l'uranium, le vanadium, et le molybdène, par une liqueur aqueuse contenant du bicarbonate de sodium et du carbonate de sodium en présence d'oxygène libre insufflé dans le milieu réactionnel, la séparation des stériles et de la liqueur provenant de l'attaque contenant le ou les métaux solubilisés, caractérisé en ce que le minerai est traité par une liqueur aqueuse contenant en majeure partie du bicarbonate de sodium et en mineure partie du carbonate de sodium, de telle manière que le rapport massique bicarbonate de sodium/carbonate de sodium soit au moins égal à 1,5, en ce que l'on injecte l'oxygène libre dans le milieu réactionnel d'une manière telle que la pression partielle d'oxygène dans le réacteur se situe dans l'intervalle 0,1 + 20 bar, et en ce que la température du milieu réactionnel est maintenue entre 160°C et 300°C pendant un temps au plus égal à 6 heures.

2. Procédé selon la revendication 1, caractérisé en ce que le rapport massique bicarbonate de sodium/carbonate de sodium est compris entre 4 et 80.

3. Procédé selon la revendication 1, caractérisé en ce que la pression partielle d'oxygène dans le réacteur est comprise de préférence dans l'intervalle de 5 à 15 bar.

4. Procédé selon la revendication 1, caractérisé en ce que la température du milieu réactionnel est maintenue de préférence entre 180°C et 220°C.

5. Procédé selon la revendication 1, caractérisé en ce que la concentration de la liqueur d'attaque en $NaHCO_3$ peut varier entre 10 g/l et 300 g/l, mais de préférence entre 80 g/l et 160 g/l, tandis que la concentration en $Na_2CO_3$ est au plus égale à 50 g/l, mais de préférence au plus égale à 30 g/l.

6. Procédé selon la revendication 1, caractérisé en ce que l'on injecte dans le milieu réactionnel du gaz $CO_2$ pour régler, aux valeurs souhaitées, la composition de la liqueur en $CO_3H^-$.

7. Procédé selon la revendication 1, caractérisé en ce que l'on introduit dans le milieu réactionnel un catalyseur d'oxydation.

8. Procédé selon la revendication 1, caractérisé en ce que un ou plusieurs traitements préalables à l'attaque du minerai sont effectués, tels que broyage particulièrement poussé, calcination à température contrôlée, traitements par un lait de chaux, par une liqueur sodique, par une liqueur calcosodique, par une liqueur renfermant des ions $CO_3^-$ et/ou $CO_3H^-$ associés à au moins un cation, tel que $Na^+$, $K^+$, $NH_4^+$, $Ca^{+2}$, ou encore un traitement d'enrichissement physique, tel que la flottation.

## Patentansprüche

1. Verfahren zum oxydierenden Aufschluß von wenigstens ein zu der aus Uran, Vanadin und Molybdän gebildeten Gruppe gehörendes Metall enthaltenden Erzen bei hoher Temperatur mittels einer wässerigen, Natriumbikarbonat und Natriumkarbonat enthaltenden Flüssigkeit in Gegenwart von in das Reaktionsmedium eingeblasenem freiem Sauerstoff mit Trennung des Unlöslichen und der vom Aufschluß stammenden, das oder die gelösten Metalle enthaltenden Flüssigkeit, dadurch gekennzeichnet, daß das Erz mittels einer wässerigen, zum größeren Teil Natriumbikarbonat und zum kleineren Teil Natriumkarbonat derart enthaltenden Flüssigkeit behandelt wird, daß das Mengenverhältnis Natriumbikarbonat/Natriumkarbonat wenigstens 1,5 ist, daß man den freien Sauerstoff in das Reaktionsmedium in einer solchen Weise einbläst, daß der Sauerstoffpartialdruck im Reaktionsgefäß im Bereich von 0,1 bis 20 bar liegt, und daß die Temperatur des Reaktionsmediums zwischen 160°C und 300°C während einer Zeit von höchstens 6 Stunden gehalten wird.

2. Verfahren nach Anspruch 1, dadurch gekennzeichnet, daß das Mengenverhältnis Natriumbikarbonat/Natriumkarbonat zwischen 4 und 80 liegt.

3. Verfahren nach Anspruch 1, dadurch gekennzeichnet, daß der Sauerstoffpartialdruck im Reaktionsgefäß vorzugsweise im Bereich von 5 bis 15 bar liegt.

4. Verfahren nach Anspruch 1, dadurch gekennzeichnet, daß die Temperatur des Reaktionsmediums vorzugsweise zwischen 180°C und 220°C gehalten wird.

5. Verfahren nach Anspruch 1, dadurch gekennzeichnet, daß die Konzentration der Aufschlußflüssigkeit an $NaHCO_3$ zwischen 10 g/l und 300 g/l, jedoch vorzugsweise zwischen 80 g/l und 160 g/l schwanken kann, während die Konzentration an $Na_2CO_3$ höchstens 50 g/l, jedoch vorzugsweise höchstens 30 g/l beträgt.

6. Verfahren nach Anspruch 1, dadurch gekennzeichnet, daß man in das Reaktionsmedium $CO_2$-Gas einbläst, um die Zusammensetzung der Flüssigkeit an $CO_3H^-$ auf die gewünschten Werte zu regulieren.

7. Verfahren nach Anspruch 1, dadurch gekennzeichnet, daß man in das Reaktionsmedium einen Oxidationskatalysator einführt.

8. Verfahren nach Anspruch 1, dadurch gekennzeichnet, daß eine oder mehrere Behandlungen vor dem Aufschluß des Erzes, wie z. B. besonders weit getriebene Zerkleinerung, Kalzinierung bei gesteuerter Temperatur, Behandlungen mit einer Kalkmilch, mit einer Sodaflüssigkeit, mit einer Kalksodaflüssigkeit oder mit einer an wenigstens ein Kation gebundene $CO_3^-$- und/oder $CO_3H^-$-Ionen enthaltenden Flüssigkeit oder auch eine physikalische Anreicherungsbehandlung, wie z. B. die Flotation, durchgeführt werden.

# Claims

1. A process for the oxidising attack at high temperature of ores containing at least one metal from the group formed by uranium, vanadium and molybdenum, by means of an aqueous liquor containing sodium bicarbonate and sodium carbonate in the presence of free oxygen blown into the reaction medium, the separation of the sterile fraction and of the liquor emanating from the attack containing the dissolved metal or metals, characterised in that the ore is treated with an aqueous liquor containing a majority of sodium bicarbonate and a minority of sodium carbonate in such a way that the ratio by weight of sodium bicarbonate to sodium carbonate is at least 1.5, in that the free oxygen is injected into the reaction medium in such a way that the partial pressure of oxygen in the reactor is situated within the range of from 0.1 to 20 bar, and in that the temperature of the reaction medium is maintained between 160° C and 300° C for a period at most 6 hours.

2. A process according to claim 1, characterised in that the ratio by weight of sodium bicarbonate to sodium carbonate is between 4 and 80.

3. A process according to claim 1, characterised in that the partial pressure of oxygen in the reactor is preferably within the range of from 5 to 15 bar.

4. A process according to claim 1, characterised in that the remperature of the reaction medium is preferably maintained between 180° C and 220° C.

5. A process according to claim 1, characterised in that the $NaHCO_3$ concentration of the attacking liquor can vary between 10 g/l and 300 g/l, but preferably between 80 g/l and 160 g/l, while the concentration of $Na_2CO_3$ is of at most 50 g/l but preferably of at most 300 g/l.

6. A process according to claim 1, characterised in that some $CO_2$ gas is injected into the reaction medium to regulate the $CO_3H$ composition of the liquor to the desired values.

7. A process according to claim 1, characterised in that an oxidation catalyst is introduced into the reaction medium.

8. A process according to claim 1, characterised in that one or more treatments are carried out prior to the attack of the ore, such as particularly advanced crushing, calcination at a monitored temperature, treatments with whitewash, with a sodium liquor, with a calcium sodium liquor, with a liquor containing $CO_3^=$ and/or $CO_3H^-$ ions combined with at least one cation such as $Na^+$, $K^+$, $NH_4^+$, $Ca^{+2}$, or again a physical enrichment treatment such as flotation.